# EUROPÄISCHE PATENTSCHRIFT

(11) **EP 2 943 353 B1**
(45) Veröffentlichungstag und Bekanntmachung des Hinweises auf die Patenterteilung: **15.05.2019**
(21) Anmeldenummer: 14701669.5
(22) Anmeldetag: 09.01.2014
(51) Int. Cl.: B44C 1/17, B41M 3/12, B29C 63/16, B60R 13/00

(54) **VERFAHREN ZUR TRANSFERLAMINIERUNG**
METHOD OF TRANSFER LAMINATION
PROCÉDÉ PERMETTANT UNE STRATIFICATION À TRANSFERT

(30) Priorität: 11.01.2013 DE 102013000400
(43) Veröffentlichungstag der Anmeldung: 18.11.2015
(73) Patentinhaber: Karl Wörwag Lack- Und Farbenfabrik GmbH & Co. KG, 70435 Stuttgart (DE)
(72) Erfinder: NIEBLING, Curt, 82377 Penzberg (DE); DREXLER, Christian, 82467 Garmisch-Partenkirchen (DE)
(74) Vertreter: Patentanwaltskanzlei Cartagena
(86) Internationale Anmeldenummer: PCT/EP2014/000029
(87) Internationale Veröffentlichungsnummer: WO 2014/108335

(56) Entgegenhaltungen:
- EP-A1- 1 000 731
- CH-A- 431 335
- DE-A1-102004 033 540
- DE-C1- 19 920 577
- US-B1- 7 588 812

## Beschreibung

### Technisches Gebiet

Die vorliegende Erfindung betrifft ein Verfahren zur Transferlaminierung,
wobei ein Transferlaminat, umfassend eine Trägerfolie mit einem anhaftenden Dekorelement mit einer festen, pigmentierten und teilweise ausgehärteten Dekorschicht dekorseitig auf ein Substrat kaschiert wird, und
schließlich die Trägerfolie abgezogen und entfernt wird.

Ein derartiges Verfahren kann in einen herkömmlichen Lackierprozess integriert sein, so dass das Transferlaminat auf eine überlackierbare Beschichtung, beispielsweise auf eine frisch erzeugte, farbgebende Basislackschicht, am Substrat kaschiert wird. Es sollen lackierte Substrate bereitgestellt werden, beispielsweise lackierte Karosserieteile eines Kraftfahrzeugs, die mit einer perfekten Lackschicht versehen sind, wobei das Dekorelement als integraler Bestandteil dieser Lackschicht wahrgenommen wird.

### Zum Stand der Technik

Das Dokument EP 0 450 054 B1 betrifft ein Verfahren zur Herstellung von, für den Außeneinsatz vorgesehenen Kunststoffplatten mit geprägter Oberfläche. Zur Herstellung wird ein Transferlaminat bereitgestellt, das auf einem flexiblen Träger, beispielsweise einer Polyesterfolie oder einer Polypropylenfolie, eine Trennschicht und darauf eine oder mehrere Dekorschicht(en) aufweist. Dieses Transferlaminat wird mit der Dekorschicht an ein frisch extrudiertes Band (Banddicke 0,262 bis 2,032 mm) aus schlagzäh modifiziertem PVC-Harz bei der Extrusionstemperatur von 196 bis 204 °C angelegt und mit Walzen angedrückt. Anschließend wird mittels wassergekühlter Kühlwalzen auf eine Temperatur von 146 bis 171 °C abgekühlt, und daraufhin der Träger abgezogen; eine bevorzugte Abzugstemperatur ist 153 °C, und diese Abkühlung erlaubt das freie Entfernen des Trägers vom Laminat.

Das Dokument WO 97/46377 A1 offenbart ein entsprechendes Verfahren, wonach durch Transferlaminierung unter den gleichen Bedingungen Interieurteile für Kraftfahrzeuge hergestellt werden, die eine dekorative und strukturierte Oberflächenschicht aus Kunststoff aufweisen. Das Transferlaminat kann eine Polypropylenfolie enthalten, auf der eine Klarlackschicht und darauf eine farbige Dekorschicht aufgetragen sind.

Das Dokument DE 34 22 965 C2 betrifft ein Verfahren zur Herstellung von, mit einem Oberflächenschutz versehenen, Schichtstoffplatten oder -folien. Auf ein Trägermaterial, beispielsweise eine Kunststofffolie, wird ein Transferlack aufgetragen, der zumindest teilweise ausgehärtet wird. Je nach Anwendungsfall können transparente oder eingefärbte Lacksysteme Verwendung finden. Der gebildete Schichtverbund aus Trägerfolie und farbigem Transferlack wird zusammen mit einer Basislage der Schichtstoffplatte in einer geeigneten Presse verpreßt, wobei in der Regel eine Temperatur zwischen 130 und 170 °C sowie ein Druck über 40 bar, insbesondere um 100 bar angewandt wird. Nach dem Abkühlen des verpreßten Produktes wird die Trägerfolie von der Platte abgezogen, wobei der ausgehärtete Transferlack auf der Oberfläche der Schichtstoffplatte verbleibt. Dieser Lack sorgt für einen besonders guten Oberflächenschutz. Es wird eine Vielzahl von Materialien beschrieben, die als Transferlack in Frage; bevorzugte Lacksysteme sind hier Lacke auf Acrylharzbasis und Polyurethanlacke, hier insbesondere solche mit geblockten Isocyanatgruppen. Beispielsweise werden Rezepturen angegeben, die verzweigten Hydroxylgruppen-haltigen Polyester (DESMOPHEN 690 von BAYER AG) und polyfunktionelles aliphatisches Isocyanat (DESMODUR N von BAYER AG) enthalten.

Das Dokument DE 103 18 542 A1 offenbart ein Verfahren zur Herstellung von flächigen Materialien, wie Folien, Platten und dgl., die mit einer, einen Lack enthaltenden Schutzschicht versehen sind. Der Lack wird auf ein Trägermaterial aufgetragen und danach zumindest teilweise ausgehärtet. Es wird ein Lack verwendet, der auf radikalische und/oder ionische Weise polymerisierbare Substanzen enthält, und der auf das Trägermaterial aufgetragene Lack wird durch radikalische und/oder ionische Polymerisation zumindest teilweise ausgehärtet. Das so mit dem Lack versehene Trägermaterial wird mit der Lackseite mit dem flächigen Material verbunden, und danach wird das Trägermaterial abgezogen. Nach einem Ausführungsbeispiel wird auf einer Polypropylenfolie eine Mischung aus Urethanacrylat, Urethanacrylat mit reaktiven Isocyanatgruppen, und OH-funktionales Acrylat im stöchiometrischen Verhältnis zu den freien Isocyanatgruppen des additiv reagierenden Anteils an Urethanacrylat, sowie Lösemittel und einem Photoinitiator aufgetragen. Das Lösemittel wird bei ca. 100 °C verdampft, und die Schicht wird unter UV-Licht gehärtet. Auf der so erhaltenen Schicht wird eine Haftprimerschicht aufgetragen. Das so resultierende Transfermaterial wird in einem Pressvorgang bei 140 °C und 30 MPa zehn min lang in Verbindung mit folgendem Aufbau verpresst: Pressblech, Transferfolie mit Transferschicht zum harzgetränkten Papier, 20 Bögen melaminharzgetränktes Papier, Transferfolie mit Transferschicht zum harzgetränkten Papier, Pressblech. Nach Beendigung des Pressvorgangs werden die beiden Transferfolien von dem Produkt entfernt. Es kann so ein HPL-Material erzeugt werden, dessen Oberfläche den Glanz- oder Mattgrad der Trägerfolie übernommen hat, das eine hohe Kratzfestigkeit und Abrasivität aufweist und das hervorragenden Witterungschutz bietet.

Das Dokument DE 10 2007 040 376 A1 betrifft einen Lack, einen flexiblen Schichtverbund mit einem Träger und einer darauf aufgebrachten Lackschicht und die Verwendung dieses Schichtverbundes. Der Lack besteht - neben Photoinitiatoren und Additiven - aus einem Gemisch aus drei Komponenten, nämlich aus einem festen, doppelbindungshaltigen Polyol-Bindemittel (A), aus einem festen, NCO-Gruppenhaltigen Urethanacrylat-Bindemittel (B) und aus einem festen Urethanacrylat-Bindemittel (C). Nach einem Beispiel wird eine Lackzusammensetzung dieser Art auf eine 100 µm dicke PET-Folie aufgetragen. Der so gebildete Schichtverbund wird zuerst bei Raumtemperatur getrocknet und dann im Ofen bei 100 °C gehärtet. Das so erhaltene Transferlaminat wird lackseitig an ein vorher mit einer dünnen PU-Klebeschicht versehenes Aluminiumprofil unter leichtem Druck angelegt. Nach einer UV-Härtung mit einem Hg-Kaltlichtstrahler (1000 bis 7000 mJ/cm²) ließ sich PET-Folie problemlos von dem nun lackierten Aluminiumprofil abziehen.

Mit Hilfe der von KARL WÖRWAG Lack- und Farbenfabrik GmbH & Co. KG, 70435 Stuttgart, DE, entwickelten Lackfolientechnologie - vorgestellt auf der JOT-Fachtagung "Industrielles Nasslackieren am 13. und 14. November 2012 in Stuttgart, DE - sind eine "Decklackfolie" und ein "Transferlack" bekannt und marktfähig bereitgestellt worden. Die "Dekorlackfolie" besteht aus einer Trägerfolie, einem universell pigmentierbaren Basislack und einem hochflexiblen, mittels UV-Strahlung gehärteten Klarlack. Die Anwendung erfolgt durch Profilkaschierung, wobei die Trägerfolie mit Hilfe von PUR-Klebstoff auf das Profil von Kunststofffenstern aufgeklebt wird.

Der "Transferlack" besteht aus einer Trägerfolie mit Release-Eigenschaften, auf der eine thermoaktive, universell pigmentierbare Haftschicht auf Wasserbasis aufgebracht ist, auf der sich eine vollständig ausgehärtete Klarlackschicht befindet, die wiederum mit einer Schutzfolie (Transferfolie) bedeckt ist. Das Produkt "Transferlack" wird in Rollenform angeliefert, beispielsweise mit einer Bahnbreite von 600 mm und einer Bahnlänge von 700 m. Der Verarbeiter wird aus einer solchen Bahn den für die Beschichtung eines bestimmten Bauteils erforderlichen Zuschnitt ausschneiden oder ausstanzen. Zur Anwendung wird zuerst die Trägerfolie abgezogen; anschließend wird die Haftschicht direkt auf eine heiße PVC-Schmelze laminiert, die mit Hilfe von Extrusionsbeschichtung auf einem fortlaufend bewegten Aluminiumprofil bereitgestellt worden ist. Auf diesem Wege werden Dachzierleisten (Wasserabweiser) für Pkw (Mercedes-Benz-A-, -B- und -C-Klasse der Daimler AG, 70327 Stuttgart, DE) bereitgestellt, die eine Class-A-Oberfläche aufweisen sollen. Diese Technologie ist auch im Dokument DE 10 2007 058 714 A1 angesprochen. Mit "Transferlack" wird hier nicht eine bestimmte Lackzusammensetzung bezeichnet, sondern ein vierschichtiges, bahnenförmiges Produkt für die Automobilindustrie.

Das Dokument DE 103 15 582 A1 offenbart ein Verfahren und eine Vorrichtung zur Herstellung von Gegenständen mit einer dekorativen Oberfläche, insbesondere von im Inneren eines Kraftfahrzeugs einfügbaren Verkleidungsteilen mit einer dreidimensionalen Kontur. Die Oberfläche des Gegenstandes wird mit einer möglichst gleichmäßigen Beschichtung aus einem thermoplastischen Polymer überzogen, das ausgehärtet wird; vorzugsweise wird zwischen 100 und 180 °C erweichender Polyester aufgebracht. Auf die so gebildete Polymerschicht wird im Thermotransferdruck eine dekorative Darstellung aufgebracht. Hierzu wird ein mit Sublimationsfarbstoff bedrucktes Transferpapier bereitgestellt, das mit Hilfe eines beheizbaren Pressstempels an den Gegenstand angedrückt wird. Der Sublimationsfarbstoff soll eine Sublimationstemperatur von 100 bis 140 °C haben, und das Druckbild wird bei einer Temperatur von 160 °C bzw. bei Temperaturen zwischen 180 und 200 °C auf die dann bereits erweichte Polymerschicht übertragen.

Das Dokument DE 101 54 732 A1 betrifft Farbdekorübertragungssysteme sowie ein Verfahren zur Farbdekorierung unter Einsatz solcher Farbdekorübertragungssysteme. Das Farbdekorübertragungssystem umfasst wenigstens eine Schichtfolge aus
(a) einer übertragbaren Farbdekorschicht basierend auf Druckfarben ohne Haftvermittler und aufgedruckt auf
(b) einer Kunststoff-Folie.
Als Kunststoff-Folien kommen insbesondere Polyolefin- oder Polyamid-Folien in Betracht, die vorzugsweise eine Schichtdicke von 0,3 bis 250 µm haben können. Diese Kunststoff-Folie weist keine Release-Eigenschaften zur Förderung einer Ablösung der Dekorschicht auf. Das Bedrucken der Folie (b) mit dem Farbdekor (a) kann durch übliche Druckverfahren durchgeführt werden, vorzugsweise mit Hilfe des Tief- oder Flexo-Druckes auf bekannten Druckmaschinen. Zum Bedrucken eignen sich alle üblichen Druckfarben, sofern sie keine Haftvermittlerkomponenten enthalten. Jedoch können diese Druckfarben Bindemittel enthalten, hier vorzugsweise Polymerisate auf Basis von chlorierten oder fluorierten, ungesättigten Olefinen, besonders bevorzugt auf der Basis von Polyvinylchlorid.

Mit einem solchen Farbdekorübertragungssystem können flächige, das heißt zweidimensionale sowie dreidimensionale Substrate, je aus Holz, Holzwerkstoffen, Kunststoffen verschiedenster Art, sowie aus Glas oder Keramik oder Metallen dekoriert werden. Bei Übertragung der Farbdekorschicht (a) kann Wärme und/oder Druck angewendet werden; vorzugsweise sollten Temperaturen von wenigstens 80 °C erreicht werden. Nach dem Übertragungsvorgang wird die Kunststoff-Folie (b) entfernt, beispielsweise abgezogen. Es wird auch vorgeschlagen, vor dem Übertragungsvorgang auf die Farbdekorschicht (a) oder auf das Substrat eine Lackschicht, eine Primerschicht oder eine Klebstoffschicht aufzutragen, diese Lackschicht teilzuvernetzen, und nach dem Übertragen der Farbdekorschicht (a) auf das Substrat und nach dem Entfernen der Kunststoff-Folie (b) diese Lackschicht auszuhärten, oder diese Klebstoffschicht zu trocknen. Die Übertragung der Farbdekorschicht (a) kann mit Hilfe einer Membranpresse durchgeführt werden, wie sie im Dokument EP 1 000 731 A1 beschrieben ist. Nach der Übertragung kann auf der übertragenen Dekorschicht (a) eine Klarlackschicht aufgebracht werden, die in üblicher Weise ausgehärtet werden kann.

Das Dokument EP 1 000 731 A1 betrifft eine Vorrichtung zum Aufbringen eines Dekors auf ein Werkstück. Das Dekor, insbesondere ein Farbdekor befindet sich auf einer Kunststoff-Folie mit Release-Eigenschaften. Die Trägerfolie mit dem anhaftenden Farbdekor wird von der Vorrichtung dekorseitig gegen das Werkstück gedrückt und dabei die Dekor-Farbschicht(en) durch "Abpellen", wie ein Abziehbild, auf das Werkstück bzw. Substrat übertragen. Folglich wird/werden diese Farbdekorschicht(en) in Form einer vorgebildeten, einschichtigen oder mehrschichtigen Lackhaut zerstörungsfrei von der Trägerfolie abgelöst und in Form der zusammenhängenden vorgebildeten Lackhaut auf das Werkstück übertragen. Die zur Übertragung benutzte Vorrichtung weist auf:
- einen Flüssigkeitsbehälter mit einer unter Druck setzbaren Flüssigkeit;
- eine elastische Membran auf dieser Flüssigkeit;
- eine Einrichtung zur Erzeugung von hydraulischem Druck innerhalb dieser Flüssigkeit; und
- einer oberhalb und im Abstand zu der Membran angeordneten, stationär gehaltenen Platte, die als Widerlager für das zu dekorierende Werkstück dient, an das die Trägerfolie mit anhaftender Dekorschicht mit Hilfe der sich nach oben schiebenden Membran dekorseitig andrückbar ist.
Die Membran soll möglichst elastisch und dehnbar sein und kann aus elastischem Material wie etwa Silikon oder Fluorkautschuk bestehen. Die Flüssigkeit kann mit Hilfe einer Heizeinrichtung so erwärmt werden, dass die Membran eine Temperatur im Bereich zwischen 80 und 160 °C annimmt. Mit Hilfe von hydraulischen Mitteln kann in der Flüssigkeit ein Druck von 3 bis 20 bar oder sogar bis 40 bar erzeugt werden. Unter diesem hydraulischen Druck drückt die Flüssigkeit die unmittelbar aufliegende Membran nach oben, wodurch die Trägerfolie mit der anhaftenden Dekorschicht gegen das Werkstück gepresst wird. Hierdurch gelingt es, die Dekorschichthaut auch im Bereich von Profilierungen und Kanten perfekt an das Werkstück anzudrücken. Nach einer solchen Übertragung auf das Werkstück kann auf der übertragenen Dekorschichthaut eine Lackschicht aufgetragen werden, die anschließend gehärtet wird.

Der von innen nach außen graduell dunkler werdende Randbereich an der Frontscheibe eines Kraftfahrzeugs wird häufig nach einem als MIT process bzw. MIT printing bezeichneten Verfahren erzeugt; MIT steht hier für membrane image transfer. Hierbei wird typischerweise mittels Siebdruck oder Tampondruck ein aus pastöser Farbe bestehendes Bild auf eine flexible Membran gedruckt; bevorzugt ist hier eine 3 bis 6 mm starke Membran aus ausgewählten Silikonmaterialien mit einer Shore-A-Härte von 60 bis 85. Die so bedruckte Membran wird mit Hilfe einer Anformungseinrichtung exakt an die dreidimensionale Kontur des Substrates angelegt. Die Ausübung von mechanischem Druck auf die Anformungseinrichtung überträgt die feuchte, druckfähige Farbe auf das Substrat; nach dieser Übertragung kann die feuchte Farbe gehärtet werden; vgl. etwa die Dokumente US 6 776 100 B1 und EP 1 851 077 B1.

Ein gattungsgemäßes Verfahren der eingangs genannten Art ist aus dem Dokument EP 1 119 455 B1 bekannt. Dort wird ein Verfahren zur Herstellung von mit Folien beschichteten Formteilen offenbart, wobei
(A) die Oberfläche einer, eine Dicke von 10 bis 500 µm aufweisenden Kunststofffolie mit mindestens einer Lackschicht überlackiert;
(B) die Lackschicht teilweise gehärtet wird;
(C) die so hergestellte beschichtete Folie auf ein Substrat kaschiert wird, wobei die Lackschicht Haftvermittler für die Substratbeschichtung ist;
(D) der Lack ausgehärtet wird; und
(E) aus dem so beschichteten Substrat Formteile hergestellt werden.
(F) Als Substrate kommen Fahrzeugkarosserien, hier vorzugsweise Automobilkarosserien, ferner Haushaltsgeräte, hier vorzugsweise Kühlschränke, Waschmaschinen und Geschirrspüler in Betracht.
(G) Die Kunststofffolie kann von dem beschichteten Substrat abziehbar sein.

Nach einem Ausführungsbeispiel wird orientierte bzw. nicht orientierte Polypropylenfolie (sowohl 15 µm als auch 50 µm Schichtstärke) mit Metallic Wasserbasislack (Mauritiusblau FWO2-500) lackiert und 10 min lang bei Raumtemperatur getrocknet und 10 min lang bei 90 °C getrocknet. Dieser Aufbau wird mit Lackschicht in Richtung Substrat auf Metall, Holz, Papier, Kunststoff (PUR), KTL (7628, 7042) 2 bis 3 min lang bei 180 °C verpreßt. Nach dieser Applikation lässt sich die Folie abziehen. Es wird eine sehr gute Haftung zwischen Lack und Substrat sowie eine glatte glänzende Lackoberfläche erhalten.

Erfahrungsgemäß muss unter diesen Bedingungen zur Erzielung einer guten Haftung ein hoher Pressdruck angewandt werden, typischerweise ein Pressdruck deutlich oberhalb 50 bar. Damit erfordert das Verfahren nach EP 1 119 55 B1 zum Kaschieren eine hohe Anlagetemperatur und einen hohen Pressdruck. Auch die vorstehend referierten Verfahren erfordern zur Kaschierung hohen Pressdruck und hohe Temperatur.

### Aufgabe der vorliegenden Erfindung

Davon ausgehend besteht die Aufgabe der vorliegenden Erfindung darin, ein gattungsgemäßes Verfahren der genannten Art (nach EP 1 119 455 B1) anzugeben, bei dem die Kaschierung der festen, pigmentierten und teilweise ausgehärteten Dekorschicht an das Substrat unter wesentlich milderen Bedingungen durchgeführt werden kann und trotzdem eine gute Haftung zwischen Dekorelement und Substrat erzielt wird.

Zum Schmücken, Verzieren und/oder Individualisieren eines Substrates könnte einfach ein Abziehbild oder eine dekorative Klebefolie aufgeklebt werden. Das Ergebnis wirkt häufig wenig professionell, und seine Dauerhaftigkeit ist begrenzt, insbesondere unter der Einwirkung von Außenwelteinflüssen. Es wäre wünschenswerter, die Aufbringung des Dekorelements in den gewerblichen oder industriellen Lackierprozess zu integrieren, um so ein hochwertigeres Produkt zu erhalten, bei dem das zusätzliche Dekorelement in die perfekte Lackschicht integriert ist und als integraler Bestandteil dieser Lackschicht wahrgenommen wird. Das Verfahren soll beispielsweise ohne aufwändige Umrüstung bestehender Anlagen bei der erstmaligen Lackierung von Fahrzeugen beim Fahrzeughersteller oder bei der nachträglichen Lackierung im gewerblichen Lackierbetrieb anwendbar sein.

### Erfindungsgemäße Lösung der vorstehend genannten Aufgabe

Anspruch 1 definiert die erfindungsgemäße Lösung obiger Aufgabe.

Vorzugsweise kann das Transferlaminat - noch vor der Transferierung auf die Lackschicht am Substrat - auf eine Temperatur im Bereich von 60 bis 95 °C erwärmt werden und mit dieser Temperatur auf die noch feuchte und klebrige Lackschicht am Substrat kaschiert werden.

Unter diesen Bedingungen wird eine gute Haftung zwischen der Dekorschicht und der Substratbeschichtung erhalten, und die Trägerfolie kann rückstandsfrei vom übertragenen Dekorelement und von der Substratbeschichtung getrennt und entfernt werden, ohne dass Spuren der Dekorschicht an der Trägerfolie zurückbleiben. Das Dekorelement wird beschädigungsfrei übertragen. Die überlackierbare Substratbeschichtung wird mit Hilfe eines herkömmlichen Lackierprozesses am Substrat aufgebracht, und da nur ein kurzfristiger Eingriff in den herkömmlichen Lackierprozess zum Lackieren des Substrates erforderlich ist, kann eine perfekte Lackschicht am Substrat erzeugt werden, an der das Dekorelement als integraler Bestandteil dieser Lackschicht wahrgenommen wird.

Beim erfindungsgemäßen Verfahren zur Transferlaminierung wird eine auf der Trägerfolie befindliche Dekorschicht vollständig und zerstörungsfrei von der Trägerfolie gelöst und vollständig und zerstörungsfrei in Form einer Haut, Pelle oder Schicht auf die Lackschicht am Substrat übertragen bzw. transferiert. In dem hier betrachteten Gebiet hat die Fachwelt noch keine einheitliche, allgemein akzeptierte Terminologie entwickelt. Wie die vorstehend zum Stand der Technik zitierten Dokumente und weitere Dokumente zeigen, werden verschiedene Begriffe, wie Transferlaminat, Schichtverbund, Transferfolie, Laminierfolie , Lackfolie, Dekorlage, Dekorschicht, Transferlack und dgl. zur Bezeichnung gleicher oder ähnlicher Sachen verwendet. Die erfindungsgemäß vorgesehene Dekorschicht wird vollständig und zerstörungsfrei auf die Lackschicht am Substrat transferiert und könnte - auf Grund der übereinstimmenden Funktion - auch als Transferlacksicht bzw. Transferlack bezeichnet werden. In gleicher Weise könnte das erfindungsgemäß vorgesehene Transferlaminat, nämlich die mit Dekorschicht bzw. Transferlack beschichtete Trägerfolie - auf Grund der übereinstimmenden Funktion - auch als Lackfolie oder Transferfolie bezeichnet werden.

Es kann weiterhin eine Vorrichtung zur Transferlaminierung eines beschichteten Substrates unter den vorstehend angegebenen, erfindungsgemäßen Verfahrensbedingungen bereitgestellt werden.

Diese Vorrichtung bildet einen, das Transferlaminat in geringem Abstand zu der zu behandelnden Substratoberfläche bereithaltenden Applikator, der wenigstens aufweist:
- eine erste flexible Membran und im Abstand dazu eine zweite, parallel ausgerichtete, flexible Membran, die beide längs ihres Umfangs druckdicht an einem gemeinsamen Rahmen so eingespannt sind, dass ein vom Rahmen und den beiden Membranen begrenzter Zwischenraum geschaffen wird;
- dieser Rahmen mit Zuflusseinrichtung(en) und Abflusseinrichtung(en) für temperierbares Wasser versehen ist, um diesen Zwischenraum vollständig mit einer rasch austauschbaren Wasserschicht zu füllen;
- die zweite flexible Membran eine mit einem fluiden Druckmittel beaufschlagbare Kammer begrenzt; und
   insgesamt eine solche Anordnung und Ausbildung verwirklicht ist,
- dass ein allmähliches Einleiten des fluiden Druckmittels in die Kammer die zweite flexible Membran, die Wasserschicht und die erste flexible Membran ballonartig auf die zu behandelnde Substratoberfläche zu verstellen, um wenigstens den mit dem Dekorelement versehenen Bereich des Transferlaminats mit Hilfe der so verstellbaren ersten flexiblen Membran blasenfrei an die Substratbeschichtung anzulegen und anzudrücken.

Eine "ballonartige Verstellung" wird hier so verstanden, dass bei einer solchen ballonartigen Verstellung zuerst ein begrenzter Kontaktbereich zwischen Transferlaminat und Substratbeschichtung geschaffen wird, der dann allmählich auf den gesamten, für die Übertragung des Dekorelementes vorgesehenen Bereich des Transferlaminats ausgedehnt wird.

In dem Zwischenraum wird eine Wasserschicht gebildet. Das anfänglich zugeführte Wasser kann Warmwasser von Raumtemperatur sein oder eine mäßig erhöhte Temperatur aufweisen, beispielsweise 30 bis 35 °C. Die an die frisch erzeugte, noch feuchte und klebrige Lackschicht am warmen Substrat angelegte Dekorschicht soll nicht vorzeitig abgekühlt werden, sondern soll anfänglich in der Lage sein, ihre in dieser speziellen Umgebung durch Erwärmung aktivierbaren haftvermittelnden Eigenschaften zu aktivieren, bevor die Andrückphase beendet und die Trägerfolie rasch abgekühlt wird.

Sofern das Transferlaminat noch vor der Transferierung auf die Lackschicht am Substrat auf eine höhere Temperatur erwärmt werden soll, wird in dem Zwischenraum eine flexible Heißwasserschicht gebildet und eingeschlossen, welche die erste flexible Membran, und nach deren anfänglicher Verstellung das an dieser ersten flexiblen Membran anliegende Transferlaminat rasch auf die Andrücktemperatur erwärmt. Durch Einführen des fluiden Druckmittels in die Kammer wird der Andrückdruck aufgebaut und aufrechterhalten. Als fluides Druckmittel kann vorzugsweise Druckluft eingesetzt werden. Durch Einleiten von kaltem Wasser in den Zwischenraum wird die Trägerfolie rasch auf die Abzugstemperatur abgekühlt, während der Andrückdruck aufrechterhalten bleibt. Alle für die erfindungsgemäße Transferlaminierung erforderlichen Bedingungen können mit Hilfe einer einfach aufgebauten und leicht bedienbaren Vorrichtung realisiert werden.

### Vorteilhafte Ausgestaltungen und Weiterbildungen der vorliegenden Erfindung

Als Substrat kommen alle lackierbaren Gegenstände in Betracht, insbesondere Werkstücke aus Metall und Metallblech, ferner Formteile aus Kunststoff, aus faserverstärktem Kunststoff und aus Verbundmaterialien, und weiterhin Möbelstücke und Möbelstückteile. Die zu behandelnde Substratoberfläche kann plan oder dreidimensional konfiguriert sein. Besonders strenge Anforderungen werden an die Qualität von Kfz-Lackierungen gestellt; ohne darauf beschränkt zu sein oder eine solche Beschränkung zu beabsichtigen, wird die Erfindung nachstehend im Einzelnen in Verbindung mit der Lackierung einer Kfz-Motorhaube erläutert.

Die überlackierbare Beschichtung am Substrat kann nach einem herkömmlichen Lackierprozess mit Hilfe handelsüblich zugänglicher, an das Substrat angepasster Lacke erzeugt werden; geeignete Lacke sind dem Fachmann bekannt; es kann auf die Fachliteratur verwiesen werden, beispielsweise auf BASF HANDBUCH Lackiertechnik, von Goldschmidt & Streitberger, erschienen im Vincentz Verlag, 30062 Hannover, DE, 2002. Zur Erzeugung der überlackierbaren Substratbeschichtung können wärmehärtende und strahlungshärtende Lacke eingesetzt werden; gut geeignet sind pigmentierte Wasserbasislacke, die bevorzugt eingesetzt werden.

Lacke enthalten Bindemittelkomponenten, Bindemittel, Vernetzungsmittel und gegebenenfalls Härter und Initiatoren, die wechselseitig aufeinander abgestimmte reaktive Gruppen enthalten. Im Verlauf der Filmbildung reagieren diese Gruppen miteinander und bilden dreidimensional miteinander vernetzte Netzwerk, bis schließlich eine vollständige Vernetzung bzw. Aushärtung der Lackschicht erreicht ist. Der Vernetzungsvorgang kann eingeleitet und gesteuert werden, beispielsweise durch Lösungsmittelentzug, Erwärmung und gegebenenfalls Strahlungshärtung. Eine "überlackierbare Beschichtung" meint eine solche, durch Applikation eines Lackes erzeugte Beschichtung, deren Vernetzung eingeleitet aber noch nicht abgeschlossen ist. Die "überlackierbare Beschichtung" enthält miteinander reagierende und reaktionsbereite Bindemittelkomponenten, Bindemittel und/oder Vernetzungsmittel, die mit passenden Gruppen in einer nachfolgend aufgebrachten Beschichtung reagieren können. Ein Substrat mit einer teilweise ausgehärteten Lackschicht kann gelagert werden; durch Einleitung und Fortsetzung der Vernetzungsreaktion kann der Zustand der "überlackierbaren Beschichtung" eingestellt werden. Sofern Lacke mit aktiven Bindemittelkomponenten, Bindemitteln und/oder Vernetzungsmitteln, beispielsweise auf der Basis reaktive Gruppen enthaltender , urethanmodifizierter bzw. urethanbildender Acrylatsysteme eingesetzt werden, kann eine solche Vernetzungsreaktion bereits durch mäßige Erwärmung auf Temperaturen im Bereich von 60 bis 80 °C eingeleitet werden.

Die pigmentierte Dekorschicht am Dekorelement soll vor dem Hintergrund der Substratbeschichtung wahrnehmbar sein. Vorzugsweise wird daher das Dekorelement auf eine pigmentierte Basislackschicht oder Deckschicht am Substrat kaschiert, deren Pigmentierung sich von der Dekorschichtfarbe unterscheidet. Anschließend kann eine Überlackierung mit Klarlack erfolgen.

Nach einer vorteilhaften Ausgestaltung der Erfindung ist die überlackierbare Beschichtung am Substrat eine pigmentierte Basislackschicht oder Deckschicht, deren Vernetzung eingeleitet aber noch nicht abgeschlossen ist.

Im Rahmen der Erfindung ist erkannt worden, dass die Trägerfolie auf eine frisch erzeugte, noch warme und klebrige Basislackschicht kaschiert und dann nach einer ausreichend schnellen und tiefen Abkühlung bzw. "Abschreckung" wieder entfernt werden kann, ohne diese Basislackschicht zu beeinträchtigen. Im erfindungsgemäßen Verfahren wird das Transferlaminat auf eine frisch erzeugte, noch warme, feuchte und klebrige Basislackschicht kaschiert. Eine derartige, noch warme, feuchte und klebrige Basislackschicht wird nach der Zwischentrockung ("flash off') der zuletzt applizierten Basislackschicht erhalten, wobei das Substrat typischerweise noch eine Temperatur im Bereich zwischen 50 und 70 °C aufweist. Anschließend kann ein einkomponentiger oder zweikomponentiger Klarlack aufgebracht werden, und schließlich der gesamte Schichtaufbau vollständig vernetzt und ausgehärtet werden, typischerweise durch Erwärmung auf 130 bis 150 °C. Hierbei wird auch die übertragene Dekorschicht vollständig ausgehärtet.

Folglich ist im Rahmen der vorliegenden Erfindung vorgesehen, dass das Transferlaminat im Verlauf eines herkömmlichen Lackierprozesses des Substrates auf die im Verlauf dieses Lackierprozesses zuletzt applizierte Lackschicht, insbesondere Basislackschicht, nach deren Zwischentrocknung kaschiert wird, solange diese (Basis)-Lackschicht noch feucht und klebrig ist, und das Substrat eine Temperatur im Bereich zwischen 50 und 70 °C aufweist.

Die Trägerfolie soll flexibel sein, um auch an dreidimensional konfigurierte Substratoberflächen faltenfrei und blasenfrei anlegbar zu sein; ferner soll die mit dem Dekorelement versehene Trägerfolie für Aufbewahrungs- und Transportzwecke zu einem Wickel aufrollbar sein. Die Dekorschicht soll an der Trägerfolie ausreichend haften, auch nach einer teilweisen Härtung und Vernetzung der Dekorschicht. Andererseits muss nach der erfindungsgemäßen Transferlaminierung die Haftung zwischen der Dekorschicht und der überlackierbaren Substratbeschichtung größer sein, als die Haftung zwischen der Dekorschicht und der "abgeschreckten" Trägerfolie, damit die Trägerfolie - ohne Mitreißen von Lackschichtpartikeln - entfernt werden kann. Als Trägerfolien kommen insbesondere imprägnierte Papiere, sogenannte Papierfolien, Metallfolien und Kunststofffolien in Betracht. Gut geeignet sind beispielsweise übliche Aluminiumfolien, vorzugsweise mit einer anodisch passivierten Al-Oberfläche, wobei die Dekorschicht auf diese passivierte Al-Oberfläche aufgebracht wird. Als Kunststofffolien kommen gegossene oder kalandrierte Folien aus eher inerten thermoplastischen Polymerisaten, wie Polyolefine, halogenierte Polyolefine, Polyamide und aromatische Polyester, ferner Folien aus Mischungen und/oder aus Blends aus diesen Materialien in Betracht. Derartige Kunststofffolien können vorzugsweise eine Schichtdicke von 10 bis 250 µm aufweisen; noch weiter bevorzugt sind derartige Kunststofffolien mit einer Schichtdicke von 20 bis 120 µm. Sehr gute Ergebnisse wurden beispielsweise mit einer 40 µm starken, biaxial gereckten Folie aus Polypropylen erzielt.

Nach einem weiteren Gesichtspunkt der vorliegenden Erfindung wird als Trägerfolie vorzugsweise eine Kunststofffolie eingesetzt, die aus Polyolefin, halogeniertem Polyolefin, Polyamid, aromatischem Polyester sowie aus Mischungen und/oder aus Blends aus diesen Materialien besteht, und die eine Schichtdicke von 10 bis 250 µm aufweist.

Die Anwendung eines Trennmittels zwischen Trägerfolie und Dekorschicht ist weniger wünschenswert, weil nach der Ablösung der Trägerfolie auf der Dekorschicht zurückbleibende Trennmittelrückstände die spätere Überlackierung mit einem Klarlack beeinträchtigen könnten; Tenside und dgl. stören auch in kleinsten Konzentration die Applikation von flüssigem Lack und dessen Verlaufverhalten.

Das Dekorelement hat eine Dekorschicht, haftet an der Trägerfolie und ist von dieser unter den erfindungsgemäß vorgesehenen Bedingungen zerstörungsfrei auf die überlackierbare Substratbeschichtung übertragbar. Das Dekorelement kann einteilig oder mehrteilig ausgebildet sein; ein mehrteiliges Dekorelement kann beispielsweise aus mehreren, voneinander getrennten Buchstaben eines Wortes und/oder Ziffern einer Zahl bestehen; ferner kommt hier eine Kombination aus mehreren, voneinander beabstandeten Streifen und Bändern in Betracht. Jedes einzelne Dekorelementteil kann beliebige Gestalt bzw. Umriss haben; beispielsweise kommen hier übliche Formen, wie etwa Sonne, Mond, Stern, runde Scheibe, Blitz, Pfeil und andere Symbole und Motive in Betracht.

Die Dekorschicht ist pigmentiert; hier kommen bunte und unbunte Pigmente in Betracht; mit Hilfe unbunter Pigmente kann beispielsweise eine weiße oder graue oder silberfarbene oder schwarze Buchstaben- und/oder Ziffernfolge wiedergegeben werden, die sich von einer kontrastierend farbigen Basislackschicht am Substrat abhebt. Gegebenenfalls können zusätzlich plättchenförmige Effektpigmente, Interferenzpigmente und Perlglanzpigmente vorgesehen werden, welche einen Metallic-Effekt sowie vom Betrachtungswinkel abhängige Farbtonverschiebungen und/oder Helligkeitsunterschiede hervorrufen.

Die Dekorschicht kann einfarbig sein (einschließlich "unbunter Farben") und aus einer oder mehreren Lackschicht(en) aufgebaut sein. Die Applikation dieser Lackschicht(en) auf der Trägerfolie kann insbesondere durch Spritzen, Aufstreichen, Walzen oder Rakeln erfolgen. Im Falle eines mehrteiligen Dekorelementes können die einzelnen Dekorelementteile bereits in ihrer fertigen Gestalt mit Hilfe von Schablonen oder sonstigen Abdeckmitteln aufgebracht werden; alternativ kann eine vollflächige Beschichtung aufgebracht werden, aus welcher die einzelnen Dekorelementteile (nach Vorlage oder programmgesteuert) ausgeschnitten werden; die nicht länger gewünschten Beschichtungsbereiche werden entfernt, beispielsweise mit Hilfe von Lasersputtering.

Alternativ kann die Dekorschicht ein mehrfarbiges Bild oder eine sonstige mehrfarbige Darstellung wiedergeben, das/die mit Hilfe von Siebdruck oder Offsetdruck, hier insbesondere nach einem kombinierten Tiefdruck-Offsetverfahren auf der Trägerfolie aufgebracht worden ist. Die so gebildete Druckfarbenschicht kann mit einer Klarlackschicht überlackiert sein, welche die Druckfarbenschicht schützt, stabilisiert und deren vollständige Übertragung auf die Substratbeschichtung unterstützt.

Es darf daran erinnert werden, dass das Dekorelement nach seiner Übertragung auf die Substratbeschichtung spiegelbildlich wahrgenommen wird. Das Dekorelement ist daher in seiner Spiegelbildform auf der Trägerfolie aufzubringen, so dass dieses Dekorelement nach seiner Übertragung auf die Substratbeschichtung in der angestrebten Originalform wahrgenommen werden kann.

Zur Herstellung der Dekorschicht wird eine Lackformulierung auf der Trägerfolie aufgebracht, abgelüftet und getrocknet. Gut geeignet ist eine flüssige Lackformulierung, die aufgesprüht oder mit dem Rakel aufgestrichen werden kann. Häufig ist bereits eine 1 min lange Ablüftung sowie eine 1 min lang Trocknung mit Hilfe von Warmluft und IR-Strahlung ausreichend, um eine bei Raumtemperatur trockene, nicht klebrige, flexible und lagerfähige Dekorschicht zu erhalten. Durch eine erneute mäßige Erwärmung der Dekorschicht, vorzugsweise auf eine Temperatur im Bereich von 60 bis 95 °C, sollen deren haftvermittelnde Eigenschaften aktivierbar sein. Erfindungsgemäß wird zur Bildung der Dekorschicht eine solche Lackformulierung gewählt werden, damit die haftvermittelnden Eigenschaften der Dekorschicht beim Schritt der Anlage an das eine Temperatur im Bereich von 50 bis 70 °C aufweisende Substrat aktiviert werden. Entsprechende Lackformulierungen auf der Basis von Acrylharzen, von Polyesterharzen und von Polyurethanharzen, sowie auf der Basis von Gemischen und Blends dieser Harze, einschließlich Bindemitteln und Bindemittelkomponenten auf der Basis von Polyesterurethanen und Urethanacrylaten sind dem Fachmann bekannt und stehen handelsüblich zur Verfügung. Die, die Dekorschicht bildende Lackformulierung soll mit der auf dem Substrat vorgelegten, frisch aufgebrachten Lackschicht kompatibel sein. Vorzugsweise werden für beide Lackschichten gleiche oder ähnliche Lacksysteme verwendet. Die pigmentierte Basislackschicht auf einem Kraftfahrzeug wird häufig aus Lackformulierungen auf der Basis von, in Wasser gelöster oder dispergierter Polyurethandispersionen erzeugt. Vorzugsweise wird im Rahmen der vorliegenden Erfindung in diesem Falle auch zur Bildung der Dekorschicht ein wasserbasierendes Polyurethan-Lacksystem verwendet.

Ferner kann die Dekorschicht vorzugsweise aus wärmehärtenden Lackformulierungen auf der Basis chemisch reaktiver Acrylatharze erzeugt werden, die funktionelle Gruppen, wie etwa Hydroxylgruppen, Carboxylgruppen, Aminogruppen und Amidogruppen enthalten. Die Vernetzung kann unter Urethanbildung erfolgen, etwa durch Selbstvernetzung der Bindemittelkomponente(n) oder durch Fremdvernetzung durch Isocyanathärter. Auf dieser Basis können hochreaktive wärmehärtende Lackformulierungen bereitgestellt werden, deren Vernetzungsreaktion bereits durch mäßige Erwärmung auf eine Temperatur im Bereich von 60 bis 80 °C erreicht werden kann. Derartige Lackformulierungen sind dem Fachmann bekannt und können handelsüblich im Fachhandel bezogen werden, beispielsweise von KARL WÖRWAG Lack- und Farbenfabrik GmbH & Co. KG, 70435 Stuttgart, DE.

Folglich ist nach einer weiteren vorteilhaften Ausgestaltung der vorliegenden Erfindung vorzugsweise vorgesehen, dass die Dekorschicht aus wärmehärtenden Lackformulierungen auf der Basis chemisch reaktiver Acrylatharze erhältlich ist, deren unter Urethanbildung verlaufende Vernetzungsreaktion bereits durch mäßige Erwärmung auf eine Temperatur im Bereich von 60 bis 80 °C eingeleitet werden kann.

Die auf der Trägerfolie aufgebrachte Dekorschicht wird teilweise ausgehärtet. Dies kann typischerweise durch Trocknung erreicht werden. Nach der teilweisen Vernetzung und Aushärtung soll die Dekorschicht ausreichend an der Trägerfolie haften und immer noch so elastisch sein, dass die Dekorschicht das Aufrollen der Trägerfolie zu einem Wickel ohne Beschädigung mitmacht.

Bevorzugt ist eine Dekorschicht mit einer Trockenschichtdicke von 18 bis 30 µm. Eine solche Dekorschicht kann problemlos mit einer Klarlackschicht überlackiert werden. Die Dekorschicht trägt nicht wesentlich auf, und es kann eine perfekte Lackschicht erzeugt werden, an der das Dekorelement in die Lackschicht integriert wahrgenommen wird.

Das Transferlaminat wird auf eine Temperatur erwärmt, bei der die durch Erwärmung aktivierbaren haftvermittelnden Eigenschaften der Dekorschicht aktiviert werden. Häufig kann hierzu bereits die Anlage an der frisch erzeugten Lackschicht ausreichen, die sich auf dem eine Temperatur im Bereich von 60 bis 80 °C aufweisenden Substrat befindet; insbesondere dann, wenn dieses Substrat eine eigene hohe Wärmekapazität aufweist, wie etwa das nach der vorausgegangenen Zwischentrocknung noch warme Stahlblech einer Kfz-Karosserie. In einem solchen Falle ist keine zusätzliche Erwärmung des Transferlaminates vor der Anlage an die frisch erzeugte und noch feuchte und klebrige Lackschicht auf dem noch warmen Substrat erforderlich.

Alternativ kann das Transferlaminat vor dessen Anlage an das warme Substrat auf eine Temperatur im Bereich von 60 bis 95 °C erwärmt werden und mit dieser Temperatur an die überlackierbare Beschichtung am Substrat angelegt werden. Mit dieser Erwärmung wird die Dekorschicht an der Trägerfolie in einen überlackierfähigen Zustand versetzt. Weist die Dekorschicht ein hochreaktives wärmehärtendes Lacksystem auf, kann eine Erwärmung auf eine Temperatur im Bereich von 60 bis 80 °C ausreichend sein, was mehr bevorzugt ist. Unter diesen Bedingungen schafft das Andrücken der überlackierfähigen Dekorschicht an die überlackierbare Substratbeschichtung einen starken Verbund zwischen den reaktionsfähigen Lackschichten.

Folglich ist nach einer weiteren vorteilhaften Ausgestaltung der vorliegenden Erfindung vorzugsweise vorgesehen, dass das Transferlaminat auf eine Temperatur im Bereich von 60 bis 95 °C erwärmt wird und mit dieser Temperatur auf die noch feuchte und klebrige Lackschicht am Substrat kaschiert wird.

Das Transferlaminat mit der überlackierfähigen Dekorschicht wird vollflächig unter einem Druck von 0,2 bis 5,0 bar, insbesondere unter einem Druck von 0,4 bis 5,0 bar an die überlackierbare Substratbeschichtung angedrückt. Es ist ein allmählicher Druckaufbau vorgesehen, der zu einer ballonartigen Wölbung der ersten flexiblen Membran und des daran anliegenden Transferlaminats führt. Das Transferlaminat kann blasenfrei an die Substratbeschichtung angelegt werden. Der tatsächlich angewandte Andrückdruck wird auch in Abhängigkeit vom Substrat und dessen Stabilität gewählt.

Beispielsweise kann nach dem erfindungsgemäßen Verfahren ein relativ großflächiges Dekorelement (beispielsweise mit einer Fläche größer 1.000 cm²) auf ein vergleichsweise großflächiges Kfz-Karosserieteil, wie etwa eine Motorhaube, eine Türe, ein Dach, eine Kofferraumabdeckung oder eine Heckklappe appliziert werden, das mit einer frisch erzeugten, nach einer kurzen Zwischentrockung noch feuchten und klebrigen Lackschicht aus einem pigmentierten Wasserbasislack versehen ist. Hier wird typischerweise ein Andrückdruck von 0,2 bis 0,8 bar, und vorzugsweise ein Andrückdruck von 0,5 bis 0,8 bar angewandt, um Verformungen des Kfz-Karosserieteils zu vermeiden. So kann beispielsweise die Farbschicht der Dachlackierung eines MINI® aufgebracht werden; am MINI® hat das Dach häufig eine andere Farbe als die restliche Karosserie. (MINI® ist eine eingetragene Marke der Bayerische Motorenwerke AG, 80809 München, DE).

Nach einer weiteren bevorzugten Ausgestaltung der Erfindung ist vorgesehen dass
- das Substrat ein vergleichsweise großflächiges Kfz-Karosserieteil ist;
- die überlackierbare Substratbeschichtung eine frisch erzeugte, nach einer kurzen Zwischentrocknung noch feuchte und klebrige Lackschicht aus pigmentiertem Wasserbasislack ist; und
- das mit einer erwärmten und so überlackierfähigen Dekorschicht versehene Transferlaminat unter einem Druck von 0,5 bis 0,8 bar an diese Substratbeschichtung angedrückt wird.

Auf diesem Wege kann mit einfachen Mitteln und Maßnahmen eine Mehrfarbenlackierung eines Kraftfahrzeugs durch Transferlack erhalten werden. Diese Mehrfarbigkeit kann ohne das aufwendige Abkleben und Maskieren derjenigen Flächenbereiche erreicht werden, die nicht mit der zweiten oder gegebenenfalls sogar dritten oder weiteren Farbe in Berührung kommen sollen. Zum Aufbringen der zweiten Farbe auf bestimmten begrenzten Flächenabschnitten ist kein zweiter Durchlauf durch die Lackierstraße und/oder eine Verdoppelung bestimmter Lackiertakte erforderlich. Auch zusätzliche Trocknungsschritte sind nicht erforderlich, was die Energieeffizienz verbessert. Die Designvielfalt am Pkw kann gesteigert werden, weil eine Individualisierung durch zwei und mehr verschiedene Farben ermöglicht wird.

Ein hoher Andrückdruck von 4,0 bis 5,0 bar wird vorzugsweise bei kleinteiligen Werkstücken aus Metall angewandt, beispielsweise bei Profilen und Zierleisten.

Im Verlauf der Andrückphase erfolgt längs der Grenzfläche zwischen überlackierbarer Substratbeschichtung und überlackierfähiger Dekorschicht eine Reaktion zwischen reaktionsfähigen Gruppen und Komponenten in beiden Schichten. Es muss ein Verbund mit starker Haftung geschaffen werden, welche die Haftung zwischen der Dekorschicht und der "abgeschreckten" Trägerfolie übersteigt, so dass die Trägerfolie nach rascher Abkühlung bzw. "Abschreckung" problemlos von der Dekorschicht und gegebenenfalls von der Substratbeschichtung getrennt und abgezogen werden kann. Im Falle hochreaktiver wärmehärtender Lacksysteme in beiden Schichten kann eine kürzere Zeitspanne der Andrückphase ausreichend sein; in einem solchen Falle ist eine Andrückphase von 40 bis 180 sec mehr bevorzugt, und eine Andrückphase von 40 bis 120 sec ist noch weiter bevorzugt. Je kürzer die Andrückphase, desto kürzer kann die Unterbrechung des laufenden herkömmlichen Lackierprozesses gewählt werden.

Eine rasche Abkühlung der Trägerfolie von der Anlagetemperatur auf eine Temperatur im Bereich von 5 bis 20 °C meint hier eine Abkühlung innerhalb einer Zeitspanne kleiner 30 sec, mehr bevorzugt innerhalb einer Zeitspanne kleiner 20 sec und noch weiter bevorzugt innerhalb einer Zeitspanne kleiner 10 sec. Dies kann durch raschen Austausch der warmen oder heißen Wasserschicht gegen eine kalte Wasserschicht und fortlaufende Spülung des Zwischenraums zwischen den beiden flexiblen Membranen mit kaltem Wasser erreicht werden. Als kaltes Wasser kann typischerweise Leitungswasser eingesetzt werden. Je schneller die Trägerfolie abgekühlt bzw. abgeschreckt wird, desto leichter lässt sich die Trägerfolie von der Dekorschicht trennen. Die an der Substratbeschichtung haftende und damit am Substrat anliegende Dekorschicht kühlt wegen der größeren Wärmekapazität des Substrats nicht so schnell ab. Die resultierende Temperaturdifferenz zwischen der Trägerfolie und Substrat/Substratbeschichtung/Dekorschicht schafft mechanische Spannungen, welche die Ablösung und Entfernung der Trägerfolie begünstigen.

Nach Entfernung der Trägerfolie werden die Substratbeschichtung und die auf die Substratbeschichtung übertragene Dekorschicht vollständig ausgehärtet; dies kann umgehend oder zu einem späteren Zeitpunkt erfolgen. Zur Aushärtung kann eine einstufige oder mehrstufige Erwärmung, typischerweise auf eine Temperatur oberhalb 100 °C erfolgen. Vorzugsweise wird auf der mit der Dekorschicht versehenen Substratbeschichtung noch eine vollflächige Klarlackschicht aufgetragen, und die vollständige Aushärtung der Substratbeschichtung und der Dekorschicht erfolgt im Rahmen der Trocknung dieser Klarlackschicht, typischerweise bei Temperaturen zwischen 130 und 150 °C. Es kann ein lackiertes Substrat erhalten, das mit einer perfekten Lackschicht versehen ist, an der das zusätzliche Dekorelement als integraler Bestandteil dieser Lackschicht wahrgenommen wird.

Nach einer weiteren bevorzugten Ausführungsform der Erfindung ist vorgesehen, dass die mit der übertragenen Dekorschicht versehene Substratbeschichtung - gegebenenfalls nach zusätzlicher Applizierung einer Klarlackschicht - durch Trocknung bei einer Temperatur zwischen 130 und 150 °C vollständig ausgehärtet wird.

### Detaillierte Beschreibung anhand von Zeichnungen und Beispiel

Nachstehend wird eine geeignete Vorrichtung zur Transferlaminierung anhand einer bevorzugten Ausführungsform mit Bezugnahme auf die Zeichnungen erläutert; die letzteren zeigen mit
- Fig. 1: eine schematische Draufsicht auf den Applikator der Transferlaminiervorrichtung;
- Fig. 2: eine schematische Seitenansicht des Applikators und dessen Haltevorrichtung;
- Fig. 3 und 4: anhand je einer schematischen Seitenansicht des Applikators eine zunehmende ballonartige Auswölbung der ersten flexiblen Membran und des Transferlaminats; und
- Fig. 5: anhand eines Schrägbildes den Einsatz eines realisierten Applikators.

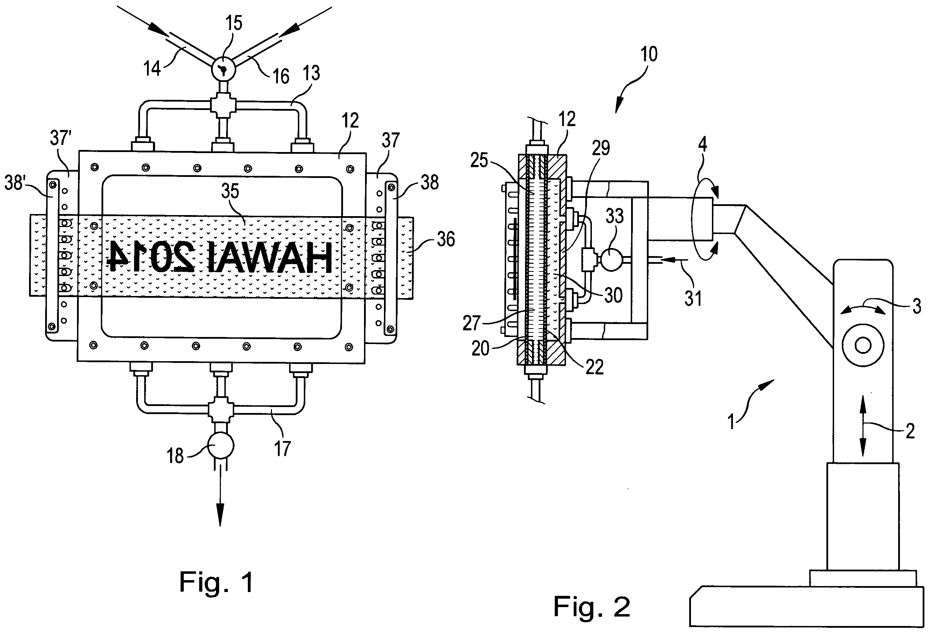

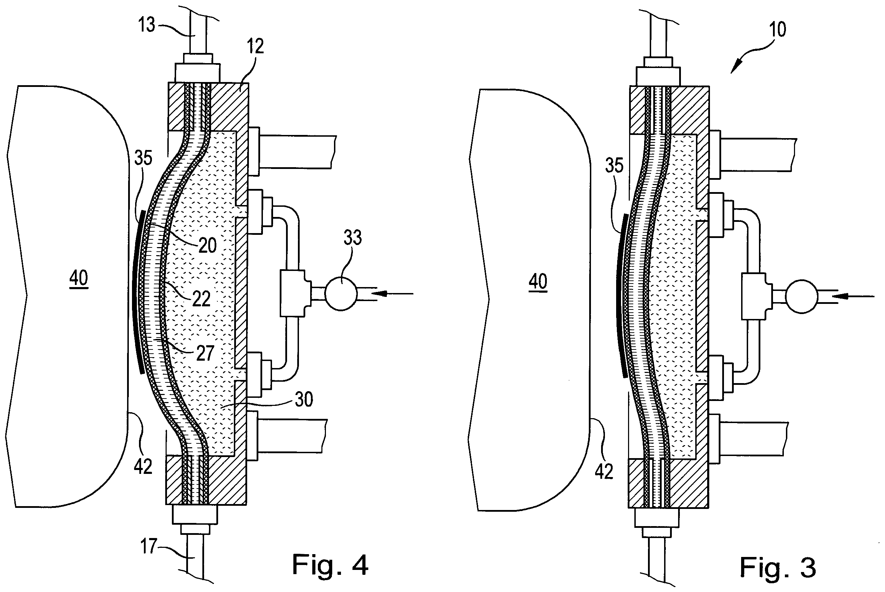

Die Fig. 2 zeigt einen Applikator 10, der von einer Haltevorrichtung 1 gehalten wird. Die Halteeinrichtung 1 ist mit einem lediglich schematisch angedeuteten Hubwerk 2 , einem Schwenkwerk 3 und einem Drehwerk 4 ausgerüstet, mit deren Hilfe der Applikator 10 in jeder beliebigen Raumrichtung ausgerichtet, sowie auf ein Substrat 40 (vgl. Fig. 3 und 4) zu und von diesem weg bewegt werden kann.

Der Applikator 10 hat einen geschlossenen, hier rechteckigen Rahmen 12, der aus mehreren flächengleichen Rahmensegmenten aus Leichtmetall aufgebaut sein kann. In diesen Rahmen 12 ist eine erste flexible Membran 20 und im Abstand dazu eine zweite, parallel ausgerichtete flexible Membran 22 eingesetzt. Jede Membran 20, 22 kann aus Naturkautschuk oder einem ähnlich elastischen Material, etwa aus einem Silikonmaterial bestehen. Beim hier beschriebenen Applikator 10 hat jede flexible Membran 20, 22 eine Fläche von 40 x 60 cm und eine Schichtdicke von 2 mm; der Abstand zwischen den beiden Membranen 20 und 22 beträgt 10 mm. Es wird ein von den beiden Membranen 20 und 22 sowie dem Rahmen 12 begrenzter, druckdichter Zwischenraum 25 geschaffen, der mit Wasser durchspült bzw. gefüllt werden kann. Von der zweiten flexiblen Membran 22 beabstandet ist am Rahmen 12 eine vollflächige Platte 29, zumeist aus Leichtmetall, druckdicht angebracht, so dass eine von der zweiten flexiblen Membran 22, dem Rahmen 12 und der Platte 29 begrenzte druckdichte Kammer 30 geschaffen wird, die mit einem fluiden Druckmittel, hier insbesondere Druckluft beaufschlagbar ist. Die Druckluft wird aus einer nur schematisch angedeuteten Druckluftquelle 31 in die Kammer 30 eingeführt; mit Hilfe des Drosselventils 33 kann ein allmählicher Druckanstieg in der Kammer geregelt 30 werden, beispielsweise innerhalb einer Zeitspanne von 3 bis 5 sec auf einen Überdruck von etwa 0,7 bar.

Wie mit Fig. 1 schematisch angedeutet, sind am Rahmen 12 Zuflusseinrichtungen 13 angebracht, über die Wasser in den Zwischenraum 25 eingeleitet werden kann; über die Leitung 14 kann mäßig warmes Wasser aus einer Warmwasserquelle oder Heißwasser aus einer Heißwasserquelle zugeführt werden; über die Leitung 16 kann Kaltwasser aus einer Kaltwasserquelle, beispielsweise Leitungswasser zugeführt werden. Beide Leitungen 14, 16 sind an ein Zuflussventil 15 angeschlossen, das entweder den Heißwasserfluss oder den Kaltwasserfluss freigibt, oder den Durchfluss völlig sperrt.

Ferner sind am Rahmen 12 Abflusseinrichtungen 17 angebracht, über die Wasser aus dem Zwischenraum 25 abgelassen werden kann. Diesen Abflusseinrichtungen 17 ist ein Abflussventil 18 zugeordnet, das den Durchfluss freigeben oder sperren kann.

Nachdem der Zwischenraum 25 anfänglich zur Temperierung mit Warm- oder Heißwasser gespült worden ist, wird das Abflussventil 18 in seine Sperrstellung gesteuert, daraufhin der Zwischenraum 25 vollständig mit Warm- oder Heißwasser gefüllt, und daraufhin auch das Zuflussventil 15 in seine Sperrstellung gesteuert. Der Zwischenraum 25 ist vollständig mit Warm- oder Heißwasser gefüllt und druckdicht verschlossen, so dass hier eine flexible Warm-oder Heißwasserschicht 27 gebildet und eingeschlossen ist. Die Einführung von Druckluft in die Kammer 30 bewirkt eine Verstellung der zweiten flexiblen Membran 22, die über die flexible Warm- oder Heißwasserschicht 27 eine gleich gerichtete und gleichwertige Verstellung der ersten flexiblen Membran 20 hervorrufen wird. Die erste flexible Membran 20 hat nahezu die Temperatur der Warm- oder Heißwasserschicht 27 angenommen und wird bei Anlage am Transferlaminat 35 dieses nahezu auf die Warm- oder Heißwassertemperatur erwärmen.

An den gegenüberliegenden Seitenholmen des Rahmens 12 ist je ein Flansch 37, 37' angebracht, dem je eine Klemmleiste 38, 38' zugeordnet ist; damit wird ein bandförmiges Transferlaminat 35 unter leichter Spannung faltenfrei festgehalten. Das Transferlaminat 35 umfasst eine Trägerfolie 36, auf der ein Dekorelement aufgebracht ist, das im vorliegenden Fall aus dem in Spiegelschrift wiedergegebenen Schriftzug **HAWAI 2014** gebildet ist. Der Schriftzug befindet sich auf der zur ersten flexiblen Membran 20 abgewandten Seite der Trägerfolie 36.

Die Arbeitsweise des Applikators 10 ist schematisch mit den Fig. 3 und 4 dargestellt; hier sind - zur Erreichung einer größeren Übersichtlichkeit - die das Transferlaminat 35 haltenden Flansche 37, 37' und Klemmleisten 38, 38' nicht dargestellt.

Der Einsatz des Applikators 10 ist vorbereitet; der Zwischenraum 25 ist vollständig mit einer Warm- oder Heißwasserschicht 27 gefüllt; das Zuflussventil 15 und das Abflussventil 18 sind je in ihre Sperrstellung gesteuert; die flexible Anordnung aus zweiter flexibler Membran 22, eingeschlossener Warm- oder Heißwasserschicht 27 und erster flexibler Membran 20 kann die Funktion einer Wärmeflasche übernehmen.

Der Applikator 10 ist benachbart und beabstandet zu einem Substrat 40 angeordnet, im vorliegenden Falle ein nur schematisch angedeutetes Kfz-Karosserieteil, nämlich eine Motorhaube; gegenüber dem Applikator 10 ist das Substrat 40 fest verankert und stabil angeordnet; der Abstand zwischen dem Transferlaminat 35 und der zu beschichtenden Substratoberfläche 42 beträgt etwa 7 cm. In die Kammer 30 wird langsam Druckluft eingeleitet, um einen allmählichen Druckanstieg herbeizuführen; innerhalb von 5 sec wird ein Überdruck von 0,7 bar erreicht. Die zweite flexible Membran 22, die flexible Wasserschicht 27 und die erste flexible Membran 20 werden gemeinsam und gleichsinnig auf das anfänglich gerade gespannte Transferlaminat 35 zu verstellt. Die erste flexible Membran 20 kontaktiert das Transferlaminat 35 und nimmt dieses bei weiterer Verstellung mit. Der allmähliche Druckanstieg bewirkt eine ballon-artige Verstellung, bei der zuerst ein begrenzter zentraler Bereich des Transferlaminats 35 die Substratoberfläche 42 kontaktiert.

Bei weiterer Verstellung wird schließlich wenigstens der gesamte, mit dem Dekorelement (= Schriftzug **HAWAI 2014**) versehene Bereich des Transferlaminats 35 an die Substratoberfläche 42 angelegt; es kann eine blasenfreie Anlage erreicht werden. Der vollständige Anlagedruck von 0,7 bar wird etwa 120 sec lang aufrechterhalten. Als Folge der Anlage reagieren reaktive Gruppen in der warmen Dekorschicht mit reaktiven Gruppen in der warmen überlackierbaren Substratbeschichtung. Es wird eine gute Haftung des Dekorelementes an der Substratbeschichtung erhalten.

Anschließend wird das Zuflussventil 15 auf Durchfluss von Kaltwasser gesteuert, und das Abflussventil 18 wird auf Durchfluss gesteuert; das Warm- oder Heißwasser im Zwischenraum 25 wird rasch gegen Kaltwasser ausgetauscht; eine Kaltwasserströmung wird eine Zeitlang zugelassen. Nachdem die Trägerfolie 36 auf eine Temperatur kleiner 20 °C abgekühlt ist, wird der Applikator 10 von dem Substrat 40 weggefahren; die am Applikator 10 festgehaltene Trägerfolie 36 wird von der beschichteten Substratoberfläche entfernt. Der Schriftzug befindet sich vollständig und ohne Beschädigung auf der Substratbeschichtung.

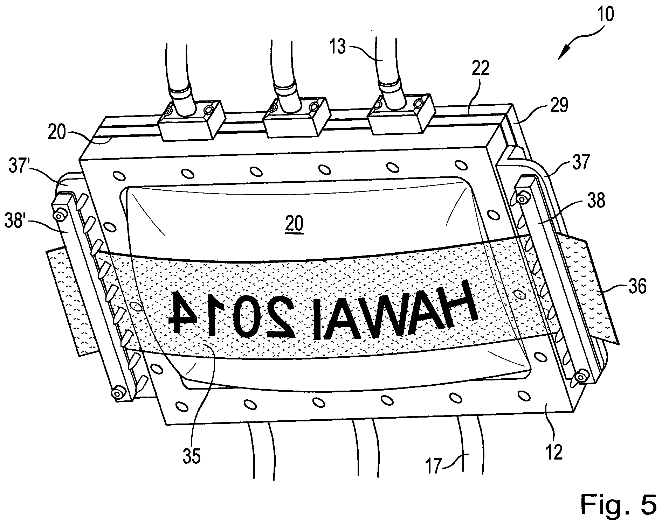

Die Fig. 5 zeigt den Einsatz eines realisierten Applikators 10. Die Wasserzuflusseinrichtung 13 und die Wasserabflusseinrichtung 17 sind nur schematisch angedeutet.

### Beispiel:

Auf eine grundierte original Motorhaube (eines AUDI A1) wird mit Hilfe einer Spritzpistole Wasserbasislack (Mauritiusblau) in einer Schichtdicke von 12 bis 14 µm appliziert. Nach der Applikation wird 2 min lang bei Raumtemperatur abgelüftet und daraufhin 6 min lang bei 60 °C innerhalb einer mit IR-Strahlern ausgerüsteten Kabine getrocknet. Anschließend ist die frisch erzeugte Basislackschicht noch feucht (Wassergehalt ca. 10 %) und klebrig. Die so lackierte Motorhaube wird ortsfest angeordnet, wobei die Haubendecke im Wesentlichen horizontal und die beiden Motorhaubenflanken im Wesentlichen vertikal ausgerichtet sind.
Neben dieser ortsfest angeordneten, frisch lackierten Motorhaube wird ein vorstehend mit Bezugnahme auf die Fig. 1 bis 5 beschriebener Applikator ortsfest, jedoch verfahrbar angeordnet. Die beiden Halteflansche halten unter leichter Spannung ein bandförmiges Transferlaminat (Länge 90 cm; Höhe 20 cm); auf einer 40 µm starken Trägerfolie aus biaxial gerecktem Polypropylen ist in Spiegelschrift der silberfarbene Schriftzug **HAWAI 2014** aufgebracht; der Schriftzug ist aus einer vollflächig aufgebrachten und teilweise ausgehärteten, pigmentierten Wasserbasislackschicht (Trockenschichtdicke 22 µm) ausgeschnitten. Das Transferlaminat ist parallel und in einem Abstand von etwa 6 cm zur linken Motorhaubenflanke angeordnet.

Der Applikator wird an eine Quelle für heißes Wasser (ca. 85 °C) und an eine Quelle für kaltes Wasser (Leitungswasser mit ca. 15 °C) angeschlossen; ferner wird über ein Abflussventil für den Wasserabfluss gesorgt. Die Kammer ist über ein Drosselventil an eine Druckluftquelle angeschlossen; der Überdruck in der Kammer kann - zeitlich gesteuert - allmählich aufgebaut werden.

Der Zwischenraum zwischen den beiden flexiblen Membranen wird vollständig mit heißem Wasser gefüllt; das Zuflussventil und das Abflussventil werden in ihre Sperrstellung gesteuert; im Zwischenraum ist eine flexible Heißwasserschicht eingeschlossen. In die Kammer wird gesteuert Druckluft eingeleitet; damit werden die zweite flexible Membran, die Heißwasserschicht und die erste flexible Membran auf das gerade gespannte Transferlaminat zu verstellt, bis die erste flexible Membran am Transferlaminat anliegt. Das Transferlaminat nimmt in wenigen Sekunden (= sec) nahezu die Temperatur des warmen oder heißen Wassers an.

Der Druck in der Kammer wird allmählich ansteigend auf 0,7 bar Überdruck gesteigert. Die erste flexible Membran wölbt sich weiter aus und drückt mit ihrem zentralen Bereich zuerst einen zentralen Bereich des Transferlaminats gegen die Motorhaubenflanke. Es wird eine ballonartige Verstellung und Anlage eines zentralen Bereichs des Transferlaminats an der Motorhaubenflanke erzielt, die innerhalb einer Zeitspanne von etwa 5 sec auf die gesamte Anlagefläche ausgedehnt wird; der gesamte, den Schriftzug enthaltende Bereich des Transferlaminats wird blasenfrei an die Motorhaubenflanke angelegt. Dieser Bereich des Transferlaminats wird mit seiner Anlagetemperatur etwa 120 sec lang unter Aufrechterhaltung des Anlagedruckes von 0,7 bar Überdruck in der Anlage an der Motorhaubenflanke gehalten.

Daraufhin wird - unter Aufrechterhaltung des Anlagedruckes - schlagartig von Heißwasserversorgung auf Kaltwasserversorgung umgeschaltet; die Trägerfolie wird innerhalb einer Zeitspanne kleiner 30 sec auf eine Temperatur kleiner 20 °C abgekühlt. Daraufhin wird die Applikatorhalterung von der Motorhaube weggefahren; die am Applikator festgehaltene Trägerfolie wird von der Motorhaubenflanke abgelöst, getrennt und entfernt. An der abgelösten Trägerfolie sind keinerlei Spuren von Mauritiusblau-Lack oder silberfarbenem Lack des Schriftzugs zu erkennen.

Anschließend kann eine Trocknung durchgeführt werden, die zur vollständigen Aushärtung der Basislackschicht an der Motorhaube und der Dekorschicht (des Schriftzugs) an dieser Basislackschicht führt; eine Trocknung bei einer Temperatur zwischen 130 und 150 °C ist gut geeignet.

Alternativ kann nach Entfernung der Trägerfolie auf der noch überlackierbaren Basislackschicht, einschließlich der Dekorschicht des Schriftzugs eine Klarlackschicht appliziert werden, und daraufhin diese Trocknung und vollständige Aushärtung durchgeführt werden.

An der Motorhaube wird eine perfekte Lackschicht erhalten, die an einer Motorhaubenflanke mit dem zusätzlichen Schriftzug **HAWAI 2014** in silberfarbener Schrift versehen ist; dieser Schriftzug trägt an der Lackoberfläche kaum auf und wird als integraler Bestandteil dieser Lackschicht wahrgenommen.

## Patentansprüche

1. Verfahren zur Transferlaminierung, wobei ein Transferlaminat, umfassend eine Trägerfolie mit einem anhaftenden Dekorelement mit einer festen, pigmentierten, teilweise ausgehärteten Dekorschicht dekorseitig auf ein Substrat kaschiert wird, und schließlich die Trägerfolie abgezogen und entfernt wird, **dadurch gekennzeichnet, dass**
• ein, eine Temperatur im Bereich zwischen 50 und 70 °C aufweisendes Substrat bereitgestellt wird, auf dem im Verlauf eines herkömmlichen Lackierprozesses eine überlackierbare Beschichtung aufgebracht worden ist, deren zuletzt applizierte Lackschicht nach deren Zwischentrocknung noch feucht und klebrig ist;
• die Dekorschicht durch eine Lackformulierung gebildet wird und haftvermittelnde Eigenschaften aufweist, die bei einer Anlage an das eine Temperatur von 50 bis 70 °C aufweisende Substrat aktiviert werden,
• das Transferlaminat auf diese noch feuchte und klebrige Lackschicht am Substrat kaschiert wird; und
• wenigstens der das Dekorelement enthaltende Bereich des Transferlaminats 40 bis 240 sec lang vollflächig unter einem Druck von 0,2 bis 5,0 bar, insbesondere unter einem Druck von 0,4 bis 5,0 bar an die Substratbeschichtung angedrückt wird; und
• gegen Ende dieser Andrückphase die Trägerfolie innerhalb einer Zeitspanne von < 30 sec auf eine Temperatur im Bereich von 5 bis 20 °C abgekühlt und daraufhin von der Dekorschicht und Substratbeschichtung entfernt wird, wobei das Dekorelement auf der Substratbeschichtung verbleibt; und
• die Substratbeschichtung mit der übertragenen Dekorschicht vollständig ausgehärtet wird.

2. Verfahren zur Transferlaminierung nach Anspruch 1, **dadurch gekennzeichnet, dass** das Transferlaminat auf eine Temperatur im Bereich von 60 bis 95 °C erwärmt wird und mit dieser Temperatur auf die noch feuchte und klebrige Lackschicht am Substrat kaschiert wird.

3. Verfahren zur Transferlaminierung nach Anspruch 1 oder 2, **dadurch gekennzeichnet, dass** die überlackierbare Beschichtung am Substrat eine pigmentierte Basislackschicht oder Deckschicht ist, deren Vernetzung eingeleitet aber noch nicht abgeschlossen ist.

4. Verfahren zur Transferlaminierung nach Anspruch 1 oder 2, **dadurch gekennzeichnet, dass** die Trägerfolie eine Kunststofffolie ist,
• die aus Polyolefin, halogeniertem Polyolefin, Polyamid oder aromatischem Polyester sowie aus Mischungen und/oder Blends aus diesen Materialien besteht; und
• diese Kunststofffolie eine Schichtdicke von 10 bis 250 µm aufweist.

5. Verfahren zur Transferlaminierung nach einem der Ansprüche 1 bis 4, **dadurch gekennzeichnet, dass** die Dekorschicht aus wärmehärtenden Lackformulierungen auf der Basis chemisch reaktiver Acrylatharze erhältlich ist, deren unter Urethanbildung verlaufende Vernetzungsreaktion bereits durch Erwärmung auf eine Temperatur im Bereich von 60 bis 80 °C eingeleitet werden kann.

6. Verfahren zur Transferlaminierung nach Anspruch 1, **dadurch gekennzeichnet, dass**
• die Dekorschicht aus wärmehärtenden Lackformulierungen auf der Basis chemisch reaktiver Acrylatharze erhältlich ist, deren unter Urethanbildung verlaufende Vernetzungsreaktion bereits durch Erwärmung auf eine Temperatur im Bereich von 60 bis 80 °C eingeleitet werden kann;
• die zuletzt applizierte Lackschicht eine Basislackschicht ist;
• das Transferlaminat auf eine Temperatur im Bereich von 60 bis 95 °C erwärmt wird und mit dieser Temperatur auf die noch feuchte und klebrige Basislackschicht am Substrat kaschiert wird; und
• wenigstens der das Dekorelement enthaltende Bereich des Transferlaminats 40 bis 240 sec lang vollflächig unter einem Druck von 0,4 bis 5,0 bar an die Substratbeschichtung angedrückt wird.

7. Verfahren zur Transferlaminierung nach einem der Ansprüche 1 bis 6, **dadurch gekennzeichnet, dass** die Dekorschicht eine Trockenschichtdicke von 18 bis 30 µm aufweist.

8. Verfahren zur Transferlaminierung nach einem der Ansprüche 1 bis 7, **dadurch gekennzeichnet, dass** die mit der übertragenen Dekorschicht versehene Substratbeschichtung - gegebenenfalls nach zusätzlicher Applizierung einer Klarlackschicht - durch Trocknung bei einer Temperatur zwischen 130 und 150 °C vollständig ausgehärtet wird.

## Claims

1. Method for transfer lamination in which a transfer laminate, comprising a backing foil with an adhering decorative element having a solid, pigmented, partially cured decorative layer, is laminated by its decoration side onto a substrate, and finally the backing foil is peeled off and removed, **characterized in that**
• a substrate is provided, having a temperature in the range between 50 and 70°C, to which an overpaintable coating has been applied in the course of a conventional painting operation, the last-applied paint film of said coating being still moist and tacky after its interim drying;
• the decorative layer is formed by a paint formulation and has adhesion-promoting properties which are activated on application to the substrate having a temperature of from 50 to 70°C
• the transfer laminate is laminated onto this still moist and tacky paint film on the substrate; and
• at least the region of the transfer laminate that comprises the decorative element is pressed onto the substrate coating for 40 to 240 sec over its full area under a pressure of 0.2 to 5.0 bar, more particularly under a pressure of 0.4 to 5.0 bar; and
• toward the end of this pressing phase, the backing foil is cooled within a time span of < 30 sec to a temperature in the range from 5 to 20°C and is thereafter removed from the decorative layer and substrate coating, the decorative element remaining on the substrate coating; and
• the substrate coating with the transferred decorative layer is cured completely.

2. Method for transfer lamination according to Claim 1, **characterized in that** the transfer laminate is heated to a temperature in the range from 60 to 95°C and at this temperature is laminated onto the still moist and tacky paint film on the substrate.

3. Method for transfer lamination according to Claim 1 or 2, **characterized in that** the overpaintable coating on the substrate is a pigmented basecoat film or top film, whose crosslinking has been initiated but not yet concluded.

4. Method for transfer lamination according to Claim 1 or 2, **characterized in that** the backing foil is a polymeric foil
• which consists of polyolefin, halogenated polyolefin, polyamide, or aromatic polyester, and also of mixtures and/or blends of these materials; and
• this polymeric foil has a layer thickness of 10 to 250 µm.

5. Method for transfer lamination according to any of Claims 1 to 4, **characterized in that** the decorative layer is obtainable from thermosetting paint formulations based on chemically reactive acrylate resins whose urethane-forming crosslinking reaction can be initiated even by heating to a temperature in the range from 60 to 80°C.

6. Method for transfer lamination according to Claim 1, **characterized in that**
• the decorative layer is obtainable from thermosetting paint formulations based on chemically reactive acrylate resins whose urethane-forming crosslinking reaction can be initiated even by heating to a temperature in the range from 60 to 80°C;
• the last-applied paint film is a basecoat film;
• the transfer laminate is heated to a temperature in the range from 60 to 95°C and is laminated at this temperature onto the still moist and tacky basecoat film on the substrate; and
• at least the region of the transfer laminate that comprises the decorative element is pressed onto the substrate coating for 40 to 240 sec over its full area under a pressure of 0.4 to 5.0 bar.

7. Method for transfer lamination according to any of Claims 1 to 6, **characterized in that** the decorative layer has a dry layer thickness of 18 to 30 µm.

8. Method for transfer lamination according to any of Claims 1 to 7, **characterized in that** the substrate coating provided with the transferred decorative layer - optionally after additional application of a clearcoat film - is completely cured by drying at a temperature of between 130 and 150°C.

## Revendications

1. Procédé de stratification à transfert, selon lequel un stratifié à transfert, comprenant un film support auquel adhère un élément décoratif muni d'une couche décorative solide, pigmentée, en partie durcie, est contrecollé côté décoration sur un substrat, et le film support est enfin soustrait et éliminé, **caractérisé en ce que**
- un substrat présentant une température dans la plage comprise entre 50 et 70 °C est préparé, sur lequel un revêtement pouvant être recouvert de vernis a été appliqué au cours d'un processus de vernissage classique, dont la couche de vernis appliquée en dernier est encore humide et collante après son séchage intermédiaire ;
- la couche décorative est formée par une formulation de vernis et présente des propriétés de promoteur d'adhésion qui sont activées lors d'une pose sur le substrat présentant une température de 50 à 70 °C,
- le stratifié à transfert est contrecollé sur le substrat sur cette couche de vernis encore humide et collante ; et
- au moins la zone contenant l'élément décoratif du stratifié à transfert est pressée pendant 40 à 240 secondes sur toute sa surface à une pression de 0,2 à 5,0 bar, notamment à une pression de 0,4 à 5,0 bar, sur le revêtement du substrat ; et
- vers la fin de cette phase de pressage, le film support est refroidi en une durée < 30 secondes à une température dans la plage allant de 5 à 20 °C, puis éliminé de la couche décorative et du revêtement de substrat, l'élément décoratif demeurant sur le revêtement de substrat ; et
- le revêtement de substrat est entièrement durci avec la couche décorative transférée.

2. Procédé de stratification à transfert selon la revendication 1, **caractérisé en ce que** le stratifié à transfert est porté à une température dans la plage allant de 60 à 95 °C, et contrecollé à cette température sur la couche de vernis encore humide et collante sur le substrat.

3. Procédé de stratification à transfert selon la revendication 1 ou 2, **caractérisé en ce que** le revêtement pouvant être recouvert par un vernis sur le substrat est une couche de vernis de base pigmentée ou une couche de recouvrement dont la réticulation est débutée mais toutefois pas encore achevée.

4. Procédé de stratification à transfert selon la revendication 1 ou 2, **caractérisé en ce que** le film support est un film en matière plastique,
- qui est constitué par une polyoléfine, une polyoléfine halogénée, un polyamide ou un polyester aromatique, ainsi que des mélanges et/ou alliages de ces matériaux ; et
- ce film en matière plastique présente une épaisseur de couche de 10 à 250 µm.

5. Procédé de stratification à transfert selon l'une quelconque des revendications 1 à 4, **caractérisé en ce que** la couche décorative peut être obtenue à partir de formulations de vernis durcissant à la chaleur à base de résines acrylates chimiquement réactives, dont la réaction de réticulation qui se déroule avec formation d'uréthane peut déjà être débutée par chauffage à une température dans la plage allant de 60 à 80 °C.

6. Procédé de stratification à transfert selon la revendication 1, **caractérisé en ce que**
- la couche décorative peut être obtenue à partir de formulations de vernis durcissant à la chaleur à base de résines acrylates chimiquement réactives, dont la réaction de réticulation qui se déroule avec formation d'uréthane peut déjà être débutée par chauffage à une température dans la plage allant de 60 à 80 °C ;
- la couche de vernis appliquée en dernier est une couche de vernis de base ;
- le stratifié à transfert est porté à une température dans la plage allant de 60 à 95 °C, et contrecollé à cette température sur la couche de vernis de base encore humide et collante sur le substrat ; et
- au moins la zone contenant l'élément décoratif du stratifié à transfert est pressée pendant 40 à 240 secondes sur toute sa surface à une pression de 0,4 à 5,0 bar, sur le revêtement du substrat.

7. Procédé de stratification à transfert selon l'une quelconque des revendications 1 à 6, **caractérisé en ce que** la couche décorative présente une épaisseur de couche sèche de 18 à 30 µm.

8. Procédé de stratification à transfert selon l'une quelconque des revendications 1 à 7, **caractérisé en ce que** le revêtement de substrat muni de la couche décorative transférée est entièrement durci par séchage à une température comprise entre 130 et 150 °C, éventuellement après application supplémentaire d'une couche de vernis transparent.
